# EUROPEAN PATENT APPLICATION

(11) **EP 4 487 983 A1**
(43) Date of publication of application: **08.01.2025**
(21) Application number: 24185496.7
(22) Date of filing: 28.06.2024
(51) Int. Cl.: B22F 10/85, B22F 12/90, B22F 10/28, B22F 10/38, B22F 10/50, B33Y 10/00, B33Y 30/00, B33Y 50/02

(54) **MELT POOL PROCESS USING NEUROMORPHIC SENSORS**

(30) Priority: 30.06.2023 US 202318345848
(71) Applicant: RTX Corporation, Farmington, CT 06032 (US)
(72) Inventor: REDDY, Kishore K., East Hartford, CT (US); LORE, Kin Gwn, East Hartford, CT (US); SUNDARAMOORTHI, Ganesh, East Hartford, CT (US)
(74) Representative: Dehns

(57) **Abstract**

A laser powder bed fusion (LPBF) system (10) includes a build plate (12), a build station piston (14) configured to adjust the height of the build plate (12) as a part (16) is built on top of the build plate (12), and a powder chamber (18) configured to contain loose build powder (20), wherein the powder chamber (18) surrounds the build plate (12). The LPBF system (10) also includes a laser system (26) configured to direct a laser beam (30) onto the loose build powder (20) to form a melt pool, which forms a layer of the part (16) as the melt pool solidifies. As each layer of the part (16) is formed, the build station piston (14) lowers the build plate (12) and part (16) by a predetermined distance corresponding to a desired thickness of a next layer of the part (16). The LPBF system (10) further includes a powder coater (22) configured to distribute additional build powder (24) over the part (16) after completion of each layer of the part (16), a controller (32), at least one neuromorphic sensor (38) configured capture asynchronous data indicative of visually observable changes to the melt pool, optionally, at least one synchronous sensor (40) configured to capture synchronous data, and means to transmit to the controller (32) the asynchronous data and, optionally, the synchronous data. The controller (32) is configured to process the asynchronous data and, optionally, the synchronous data to determine whether conditions in the LPBF system (10) are suitable for formation of or protentional formation of defects in the part (16). The controller (32) is further configured to take at least one predetermined mitigation action to mitigate the formation of or potential formation of defects in the part (16).

## Description

### BACKGROUND

The present disclosure relates generally to laser powder bed fusion additive manufacturing and, more particularly, to a method of monitoring a laser powder bed fusion additive manufacturing process.

Laser powder bed fusion (LPBF) additive manufacturing is an additive manufacturing, or 3-D printing, technology that uses a laser to sinter or fuse metallic or polymeric particles together in a layer-by-layer process. LPBF is typically used as an industrial process to make near net shape parts. Some LPBF processes sinter the build powder particles, while others melt and fuse the build powder particles. LPBF is also known as direct metal laser sintering (DMLS).

LPBF additive manufacturing processes are dynamic, high temperature, high energy processes in which conditions change rapidly as a laser scans a build powder bed to form a melt pool. The combination of rapidly changing conditions and high temperature/high energy create an environment in which defects can form in parts made with an LPBF additive manufacturing process. Because defects formed in such parts can be difficult to detect without elaborate inspection techniques, including, for example, computed tomography scans (CT or CAT scans), certifying parts made with an LPBF additive manufacturing process for commercial use can be a challenge.

### SUMMARY

One aspect of this disclosure is directed to a laser powder bed fusion (LPBF) additive manufacturing system that includes a build plate, a build station piston configured to adjust the height of the build plate as a part is built on top of the build plate, and a powder chamber configured to contain loose build powder, wherein the powder chamber surrounds the build plate. The LPBF additive manufacturing system also includes a laser system configured to direct a laser beam onto the loose build powder to form a melt pool. The melt pool forms a layer of the part as the melt pool solidifies. As each layer of the part is formed, the build station piston lowers the build plate and part by a predetermined distance corresponding to a desired thickness of a next layer of the part. The LPBF additive manufacturing system further includes a powder coater configured to distribute additional build powder over the part after completion of each layer of the part, a controller, at least one neuromorphic sensor configured capture asynchronous data indicative of visually observable changes to the melt pool, optionally, at least one synchronous sensor configured to capture synchronous data that includes at least one of melt pool temperature and melt pool pressure, and means to transmit to the controller the asynchronous data from the at least one neuromorphic sensor and, optionally, the synchronous data from the at least one synchronous sensor. The controller is configured to process the asynchronous data from the at least one neuromorphic sensor and, optionally, the synchronous data from the at least one synchronous sensor to determine whether conditions in the LPBF additive manufacturing system are suitable for formation of or protentional formation of defects in the part. The controller is further configured to take at least one predetermined mitigation action to mitigate the formation of or potential formation of defects in the part.

Another aspect of the disclosure is directed to a method for correlating laser powder bed fusion (LPBF) additive manufacturing system data with formation of defects in LPBF manufactured parts. The method includes determining data available from the LPBF additive manufacturing system, selecting at least one build design to be a basis for collecting data to correlate LPBF additive manufacturing system data with formation of defects in LPBF manufactured parts, and building a plurality of test pieces of the at least one build design using a LPBF additive manufacturing system and collecting at least a portion of the data available from the LPBF additive manufacturing system as each of the plurality of test pieces is built. The method also includes inspecting each of the plurality of test pieces to determine if any of the test pieces have defects, assessing any defects identified as a result of the inspection to determine when the defects formed during the build process and the likely cause of the defect, and correlating data collected when the defects formed during the build process to the identified defects. The method further includes determining which of the LPBF additive manufacturing system operating conditions that are observable with the at least one neuromorphic sensor and the at least one synchronous sensor can be used as criteria to indicate the formation of or potential formation of defects; and providing to a LPBF additive manufacturing system controller the identified criteria to indicate the formation of or potential formation of defects in a part, whereby the LPBF additive manufacturing system controller is configured to provide a real time indication of the formation of or potential formation of defects in the part during a build cycle.

Yet another aspect of this disclosure is directed to a method for additive manufacturing parts using a laser powder bed fusion (LPBF) additive manufacturing system. The method includes the steps of providing to the LPBF additive manufacturing system an initial batch of build powder, building a part using selected LPBF additive manufacturing system operating parameters, and collecting data about the LPBF additive manufacturing system operating conditions with at least one neuromorphic sensor and, optionally, at least one synchronous sensor. The method also includes transmitting to a LPBF additive manufacturing system controller the data collected about the LPBF additive manufacturing system operating conditions with at least one neuromorphic sensor and, optionally, at least one synchronous sensor and processing, by the LPBF additive manufacturing system controller, the data collected about the LPBF additive manufacturing system operating conditions with the at least one neuromorphic sensor and, optionally, the at least one synchronous sensor to determine whether conditions in the LPBF additive manufacturing system are suitable for the formation of or protentional formation of defects. If the controller determines that conditions are suitable for the formation of or potential formation of defects, the controller takes at least one predetermined mitigation action to mitigate the formation of or potential formation of defects.

Features of embodiments are set forth in the dependent claims.

### BRIEF DESCRIPTION OF THE DRAWINGS

Fig. 1 is a schematic of an exemplary laser powder bed fusion (LPBF) additive manufacturing system.
Fig. 2 is a flow chart of a method for correlating LPBF system data with the formation of defects in LPBF manufactured parts.
Fig. 3 is a flow chart of a method for additive manufacturing parts using a LPBF additive manufacturing system.

### DETAILED DESCRIPTION

Laser powder bed fusion (LPBF) additive manufacturing is an option to make near net shape parts. The dynamic, high temperature, high energy processes conditions that are characteristic of LPBF additive manufacturing processes create an environment that is challenging to monitor using conventional techniques. For example, the rapid changes that occur in a LPBF melt pool cannot be captured readily using conventional high speed cameras due to frame rate limitations. Similarly, the high temperatures associated with the LPBF melt pool create a dynamic range challenge for high speed cameras. As a result, it is difficult or even impossible to detect the formation of defects in parts during manufacture using an LPBF additive manufacturing process. For the same reason, it has been difficult or even impossible to control the LPBF process to limit or prevent the formation of such defects.

The relatively recent development of neuromorphic sensors, also known as event cameras, has created the possibility of monitoring LPBF additive manufacturing processes in real time. Neuromorphic sensors do not capture images using a shutter as conventional (frame) cameras do. Rather, neuromorphic sensors capture images as a collection of individual pixels that operate independently and asynchronously from all of the other pixels in the neuromorphic sensor. Each pixel reports changes in brightness as they occur and remains silent if there is no change in brightness. This feature allows neuromorphic sensors to have microsecond responsiveness and allows for a higher sampling rate that is possible using other techniques, such as high speed cameras.

The asynchronous data collection from the neuromorphic sensors can be used to identify anomalies and instabilities in the melt pool, including anomalies associated with the formation of defects in the additively manufactured part. Defects known to occur in LPBF manufactured parts include porosity, unfused powder, balling, cracking, warping, delamination, swelling, formation of humps and valleys, and other defects. Data collected from neuromorphic sensors can be supplemented with data from other sensors compatible with the LPBF environment, such as laser sensors, voltage sensors, and other sensors to create a "sensor fusion" environment to provide a richer set of data for monitoring the LPBF process.

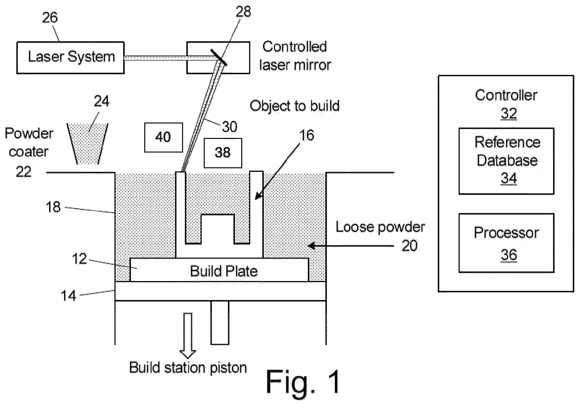

Fig. 1 is a schematic of an exemplary, non-limiting LPBF additive manufacturing system **10.** The LPBF system **10** can be used with a variety of build powders to produce a workpiece **16.** For example, the powder can be a metallic powder or polymeric powder. Metallic powders compatible with typical LPBF systems **10** include aluminum, aluminum alloys (e.g., aluminum-lithium alloys), titanium, nickel, nickel alloys, and other metals and alloys known in the art. Polymeric powders compatible with typical LPBF systems **10** include a wide variety of polymers as known in the art.

A typical LPBF system **10** includes a build plate **12,** a build station piston **14** that adjusts the height of the build plate **12,** a workpiece or part **16** that is built on top of the build plate **12,** a powder chamber **18** to contain loose, and unconsolidated build powder **20** that surrounds the workpiece **16.** A typical LPBF system **10** also includes a powder coater **22** that distributes additional build powder **24** over the workpiece **16** after completion of each layer formed on the workpiece **16.** A laser system **26** combined with a controlled laser mirror **28** directs a laser beam **30** onto loose build powder **20** to form a melt pool (not shown) that, when solidified, forms a layer of the workpiece **16.** As each layer of the workpiece **16** is formed, the build station piston **14** lowers the build plate **12** and workpiece **16** by a predetermined distance that corresponds to the desired thickness of the next layer of the workpiece **16.** The powder coater **22** then moves across the top of the loose build powder **20** to distribute a layer of additional build powder **24** that will then be consolidated with the laser beam **30** to form the next layer of the workpiece **16.**

Controller **32** controls the height of the build plate **12** by moving the build station piston **14,** which in turn controls the thickness of each layer of the workpiece **16.** Controller **32** also controls the movement of the powder coater **22** as it distributes additional build powder **24** and the movement of the laser beam **30** as it forms the melt pool that consolidates loose build powder **20** to form each layer of the workpiece **16.** For example, the controller **32** controls LPBF system **10** operating parameters, including:
(1) laser beam power, velocity and spot size, build plate temperature, and layer thickness;
(2) temperature-dependent thermophysical properties of the powder;
(3) feedstock properties including average powder particle size; and
(4) laser hatching strategy including hatch distance, hatch delay time, and stripe width.

Controller 32 typically includes a reference database **34** and processor **36.** Reference database **34** contains processing data relevant to the LPBF system **10,** build powder to be used to produce the workpiece **16,** and the specific work piece **16** to be produced. Processor **36** contains programming to interface with the reference database **34** to control the LPBF system **10** to products parts, such as workpiece **16,** as is known to a person of ordinary skill in the art. Workpiece **16** can be a near-net-shaped part (i.e., initial production of the part that is very close to the final (net) shape).

Controller **32** can also collect data from sensors used to monitor the LPBF process, including at least one neuromorphic sensor **38,** which provides an asynchronous data stream indicative of visually observable changes to the LPBF process, including changes to the melt pool. The at least one neuromorphic sensor **38,** can collect data from any portion of the observable electromagnetic spectrum associated with the LPBF process. For example, the neuromorphic sensors **38** can be configured to collect data across a range of desirable wave lengths, including wave lengths commonly associated with the infrared band, the visible band, and the ultraviolet band as well as other bands of the electromagnetic spectrum. Due to the high sampling rate (e.g., 1 MHz or 1,000,000 equivalent frames per second) of the neuromorphic sensors **38** compared with other image capture devices, such as high resolution cameras and high speed/ultra-high speed cameras, the neuromorphic sensors **38** have a microsecond temporal resolution that permits capture of data from very rapidly occurring events. In addition, the neuromorphic sensors **38** have a much higher dynamic range (e.g., 120 dB) compared with other image capture devices, allowing capture of data at a high resolution. Combining the high sampling rate with high resolution imaging allows the neuromorphic sensors **38** to produce a rich dataset for assessing the LPBF process.

The at least one neuromorphic sensor **38,** which provides fast, high resolution asynchronous data can optionally be combined with at least one synchronous sensor **40** to capture additional data such as melt pool temperature, pressure, and other visual and environmental data. Similarly, data from the at least one neuromorphic sensor **38** and the at least one synchronous sensor **40** can optionally be combined with the LPBF system **10** operating parameters discussed above, including:
(1) laser beam power, laser beam velocity, laser beam spot size, laser current and voltage, build plate temperature, and layer thickness;
(2) temperature-dependent thermophysical properties of the powder;
(3) feedstock properties including average powder particle size; and
(4) laser hatching strategy including hatch distance, hatch delay time, and stripe width to create a comprehensive data set with which the operation of the LPBF system **10** can be monitored and assessed. The at least one synchronous sensor **40** can be one or more of a temperature sensor, a pressure sensor, a voltage sensor, a conventional high speed camera, a conventional high resolution camera, a laser scanner, and any other synchronous sensor that an provide useful data. The combination of asynchronous data from the at least one neuromorphic sensor **38** and selected synchronous data points from the at least one synchronous sensor **40,** and LPBF system **10** operating parameters can be combined to provide information how much time the laser spends at a particular location for a particular layer of the build to correlate laser location and time data with information about identified defects. The objective is to combine event data with time-series data or visual data to get a more comprehensive, correlated data set with which to evaluate the formation of or potential formation of defects in LPBF manufactured parts.

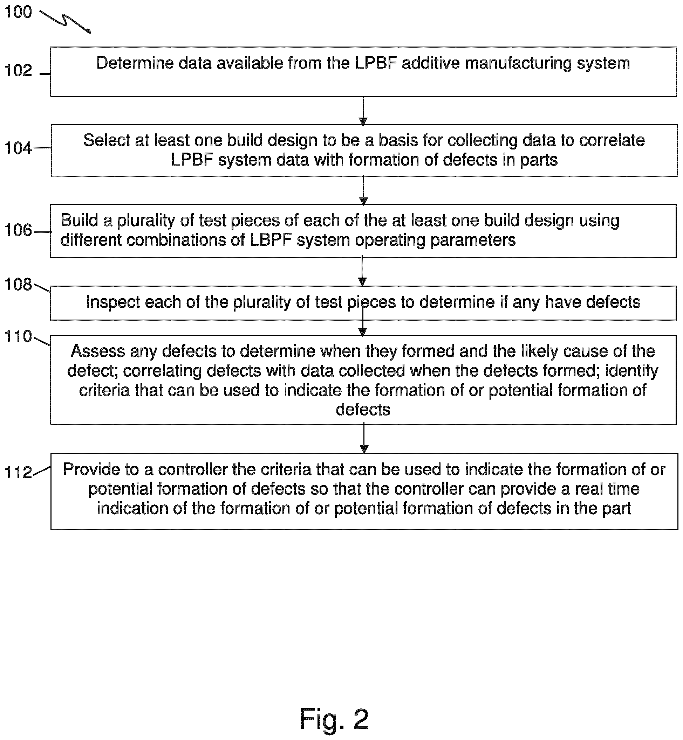

With the availability of a comprehensive data set, the method depicted in Fig. 2 can be used to correlate LPBF system **10** data with the formation of defects in LPBF manufactured parts. The defects include, but are not limited to, porosity, unfused powder, balling, cracking, warping, delamination, swelling, formation of humps and valleys, and other defects. Fig. 2 is a flow chart of a method **100** for correlate LPBF system data with the formation of defects in LPBF manufactured parts. As a first step **102,** the data available from the comprehensive data set described above are determined. Next, at step **104** at least one build design is selected to be a basis for collecting data to correlate LPBF system data with the formation of defects in LPBF manufactured parts. The at least one build design can be any build design deemed to be representative of parts to be built using the LPBF system. If desired, more than one build design (i.e., any number of build designs) can be selected for collecting data to correlate LPBF system data with the formation of defects in LPBF manufactured parts.

At step **106,** a plurality of test pieces of the at least one build design are built using a LPBF system. Different combinations of LPBF system operating parameters should be selected so the test pieces represent a range of anticipated LPBF system operating parameters for the types of parts for data to correlate LPBF system data with the formation of defects in LPBF manufactured parts will be collected. If desired, the LPBF system operating conditions can be selected to induce the formation of defects including, but are not limited to, porosity, unfused powder, balling, cracking, warping, delamination, swelling, formation of humps and valleys, and other defects. Inducing defects into the plurality of test pieces can be useful in later correlating data with the formation of such defects. During step **106,** at least a portion of the data identified in step **102** is collected as each of the plurality of test pieces is built. The data collected in step **106** can be reviewed as it is collected and, in any case, is recorded for analysis in later steps of the method **100.**

At step **108,** each of the plurality of test pieces are inspected to determine if any of the test pieces have defects including, but are not limited to, porosity, unfused powder, balling, cracking, warping, delamination, swelling, formation of humps and valleys, and other defects. The plurality of test pieces can be inspected for defects using any relevant inspection techniques including visual inspection, dye penetrant inspection, x-ray inspection (including CT/CAT scans), destructive inspection, and any other type of inspections that would be useful for identifying the presence of defects in the plurality of test pieces.

In step **110,** any defects identified as a result of the inspection step **108** are assessed to determine when they formed during the build process and the likely cause of the defect. The data collected in step **106** are then reviewed to correlate data collected when the defects formed during the build process to the defects themselves. The correlated data are then reviewed to determine which of the LPBF operating system operating conditions, including melt pool conditions, that are observable with the at least one neuromorphic sensor **38** and the at least one synchronous sensor **40** can be used as criteria to indicate the formation of or potential formation of defects. Going forward, in step **112,** the identified criteria to indicate the formation of or potential formation of defects can be provided to (e.g., coded into) the LPBF system controller **32** to provide a real time indication of the formation of or potential formation of defects during a build cycle.

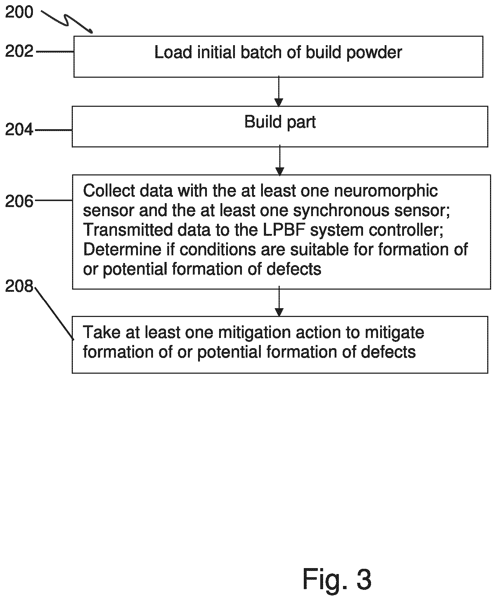

Fig. 3 is a flow chart of a method **200** for additive manufacturing of parts using a LPBF additive manufacturing system. As a first step **202,** an initial batch of build powder is provided to the LPBF system. Once the initial batch of build powder has been provided to the LPBF system, a part is built at step **204** using selected LPBF system operating parameters. The selected LPBF system operating parameters can include any desired combination of laser beam power, velocity, spot size, build plate temperature, layer thickness, and laser hatching strategy including hatch distance, hatch delay time, and stripe width. Other LPBF system operating parameters can be selected as well. The part can be a complex near-net-shaped part or any other part desired to be made using the LPBF system.

During step **206,** the data about the LPBF system operating conditions, including melt pool conditions, are collected with the at least one neuromorphic sensor **38** and, optionally, the at least one synchronous sensor **40** and transmitted to the LPBF system controller **32** through means known in the art for transmitting signals from sensors to a controller. The LPBF system controller **32** processes data from the neuromorphic sensors **38** and, optionally, synchronous sensors **40** to determine whether conditions in the LPBF system, including at the melt pool, are suitable for the formation of or potential formation of defects.

If the controller **32** determines at step **206** that conditions are suitable for the formation of or potential formation of defects, the controller **32,** at step **208,** takes at least one predetermined mitigation action to mitigate the formation of or potential formation of defects. The mitigation action can be at least one of:
- notifying an operator of the formation of or potential formation of defects by suitable means, including but not limited to providing a visual or aural alert;
- taking predetermined steps to mitigate the formation of or potential formation of defects, including but not limited to changing at least one of the LPBF system operating parameters discussed above for at least the next layer of the build process;
- taking predetermined steps correct a defect whose formation was detected by the controller **32,** including but not limited to reworking all or part of a layer in which the defect was detected;
- stopping the build process so the part can be reworked manually or scrapped as deemed appropriate;
- any other mitigation step that is deemed to be appropriate.

Additionally, the detection of the formation of or potential formation of defects and data about conditions in the LPBF system can be provided to an expert system, including an system that implements a machine learning or artificial intelligence algorithm (e.g., a reinforcement learning algorithm), to prescribe corrective actions to be taken in the next pass of the LPBF system.

The disclosed system and method uses asynchronous data collection from neuromorphic sensors to identify anomalies and instabilities in the melt pool that are associated with the formation of defects in the additively manufactured part. By identifying the formation of or potential formation of defects during the build process, certain defects can be mitigated during the build process or, if not suitable mitigation is available, the build process can be terminated or stopped early, avoiding the time and expense of completing a part known to be defective. Further, the use of the disclosed system and method can improve the repeatability of a build process to the point that parts made with the process can be certified for commercial use without elaborate inspection techniques, including, for example, computed tomography scans (CT or CAT scans.

### Discussion of Possible Embodiments

The following are non-exclusive descriptions of possible embodiments of the present invention.

A laser powder bed fusion (LPBF) additive manufacturing system, comprising: a build plate; a build station piston configured to adjust the height of the build plate as a part is built on top of the build plate; a powder chamber configured to contain loose build powder, wherein the powder chamber surrounds the build plate; a laser system configured to direct a laser beam onto the loose build powder to form a melt pool, wherein when the melt pool forms a layer of the part as the melt pool solidifies and wherein as each layer of the part is formed the build station piston lowers the build plate and part by a predetermined distance corresponding to a desired thickness of a next layer of the part; a powder coater configured to distribute additional build powder over the part after completion of each layer of the part; a controller; at least one neuromorphic sensor configured to capture asynchronous data indicative of visually observable changes to the melt pool; and means to transmit to the controller the asynchronous data from the at least one neuromorphic sensor and, optionally, the synchronous data from the at least one synchronous sensor. The controller is configured to process the asynchronous data from the at least one neuromorphic sensor to determine whether conditions in the LPBF additive manufacturing system are suitable for formation of or protentional formation of defects in the part. The controller is further configured to take at least one predetermined mitigation action to mitigate the formation of or potential formation of defects in the part.

The LPBF additive manufacturing system of the preceding paragraph can optionally include, additionally and/or alternatively, any one or more of the following features, configurations and/or additional elements.

A further embodiment of the foregoing system, further comprising at least one synchronous sensor configured to capture synchronous data that includes at least one of melt pool temperature and melt pool pressure, wherein the controller is configured to process the asynchronous data from the at least one neuromorphic sensor and the synchronous data from the at least one synchronous sensor to determine whether conditions in the LPBF additive manufacturing system are suitable for formation of or protentional formation of defects in the part.

A further embodiment of any of the foregoing systems, wherein the controller is further configured to process at least one of laser beam power, laser beam velocity, laser beam spot size, build plate temperature, layer thickness, laser hatch distance, laser hatch delay time, and laser hatch stripe width along with the asynchronous data from the at least one neuromorphic sensor and the synchronous data from the at least one synchronous sensor to determine whether conditions in the LPBF additive manufacturing system are suitable for the formation of or protentional formation of defects in the part.

A further embodiment of any of the foregoing systems, wherein the at least one predetermined mitigation action is at least one of: notifying an operator of the formation of or potential formation of defects in the part; changing at least one LPBF system operating parameter for at least the next layer of the build process; reworking all or part of a layer in which the defect was detected; stopping the build process so the part can be reworked manually; and stopping the build process so the part can be scrapped.

A further embodiment of the foregoing system, wherein notifying an operator of the formation of or potential formation of defects includes providing a visual or aural alert.

A further embodiment of the foregoing system, wherein changing at least one LPBF additive manufacturing system operating parameter for at least the next layer of the build process includes changing at least one of laser beam power, laser beam velocity, laser beam spot size, build plate temperature, layer thickness, laser hatch distance, laser hatch delay time, and laser hatch stripe width.

A method for correlating laser powder bed fusion (LPBF) additive manufacturing system data with formation of defects in LPBF manufactured parts, comprising the steps of: determining data available from the LPBF additive manufacturing system; selecting at least one build design to be a basis for collecting data to correlate LPBF additive manufacturing system data with formation of defects in LPBF manufactured parts; building a plurality of test pieces of the at least one build design using a LPBF additive manufacturing system and collecting at least a portion of the data available from the LPBF additive manufacturing system as each of the plurality of test pieces is built; inspecting each of the plurality of test pieces to determine if any of the test pieces have defects; assessing any defects identified as a result of the inspection to determine when the defects formed during the build process and the likely cause of the defect; correlating data collected when the defects formed during the build process to the identified defects; determining which of the LPBF additive manufacturing system operating conditions that are observable with the at least one neuromorphic sensor and the at least one synchronous sensor can be used as criteria to indicate the formation of or potential formation of defects; and providing to a LPBF additive manufacturing system controller the identified criteria to indicate the formation of or potential formation of defects in a part, whereby the LPBF additive manufacturing system controller is configured to provide a real time indication of the formation of or potential formation of defects in the part during a build cycle.

The LPBF additive manufacturing system of the preceding paragraph can optionally include, additionally and/or alternatively, any one or more of the following features, configurations and/or additional elements.

A further embodiment of the foregoing method, wherein the build design is representative of parts to be built using the LPBF additive manufacturing system.

A further embodiment of any of the foregoing methods, wherein building a plurality of test pieces of the at least one build design using a LPBF additive manufacturing system includes selecting LPBF additive manufacturing system operating parameters so the test pieces represent a range of LPBF additive manufacturing system operating parameters.

A further embodiment of any of the foregoing methods, wherein building a plurality of test pieces of the at least one build design using a LPBF additive manufacturing system includes selecting LPBF additive manufacturing system operating parameters to induce the formation of defects in the plurality of test pieces.

A further embodiment of any of the foregoing methods, wherein the defects in the plurality of test pieces include one or more of porosity, unfused powder, balling, cracking, warping, delamination, swelling, and formation of humps and valleys.

A further embodiment of any of the foregoing methods, wherein building a plurality of test pieces of the at least one build design using a LPBF additive manufacturing system includes selecting LPBF additive manufacturing system operating parameters so the test pieces represent a range of LPBF additive manufacturing system operating parameters.

A further embodiment of any of the foregoing methods, wherein collecting at least a portion of the data available from the LPBF additive manufacturing system includes recording the data for analysis.

A further embodiment of any of the foregoing methods, wherein inspecting each of the plurality of test pieces to determine if any of the test pieces have defects, includes inspecting the test pieces by at least one of visual inspection, dye penetrant inspection, x-ray inspection (including CT/CAT scans), and destructive inspection.

A method for additive manufacturing parts using a laser powder bed fusion (LPBF) additive manufacturing system, comprising the steps of: providing to the LPBF additive manufacturing system an initial batch of build powder; building a part using selected LPBF additive manufacturing system operating parameters; collecting data about the LPBF additive manufacturing system operating conditions with at least one neuromorphic sensor and, optionally, at least one synchronous sensor; transmitting to a LPBF additive manufacturing system controller the data collected about the LPBF additive manufacturing system operating conditions with the at least one neuromorphic sensor and, optionally, the at least one synchronous sensor; processing, by the LPBF additive manufacturing system controller, the data collected about the LPBF additive manufacturing system operating conditions with the at least one neuromorphic sensor and, optionally, the at least one synchronous sensor to determine whether conditions in the LPBF additive manufacturing system are suitable for the formation of or protentional formation of defects; and if the controller determines that conditions are suitable for the formation of or potential formation of defects, taking, by the controller, at least one predetermined mitigation action to mitigate the formation of or potential formation of defects.

The LPBF additive manufacturing system of the preceding paragraph can optionally include, additionally and/or alternatively, any one or more of the following features, configurations and/or additional elements.

A further embodiment of the foregoing method, wherein the selected LPBF additive manufacturing system operating parameters include at least one of laser beam power, laser beam velocity, laser beam spot size, build plate temperature, layer thickness, laser hatch distance, laser hatch delay time, and laser hatch stripe width.

A further embodiment of any of the foregoing methods, wherein the at least one predetermined mitigation action is at least one of: notifying an operator of the formation of or potential formation of defects; changing at least one of the LPBF additive manufacturing system operating parameters for at least the next layer of the build process; reworking all or part of a layer in which the defect was detected; stopping the build process so the part can be reworked manually; and stopping the build process so the part can be scrapped.

A further embodiment of the foregoing method, wherein notifying an operator of the formation of or potential formation of defects includes providing a visual or aural alert.

A further embodiment of the foregoing method, wherein changing at least one LPBF additive manufacturing system operating parameter for at least the next layer of the build process includes changing at least one of laser beam power, laser velocity, laser spot size, build plate temperature, layer thickness, and laser hatch distance, laser hatch delay time, and laser hatch stripe width.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A laser powder bed fusion (LPBF) additive manufacturing system (10), comprising:
a build plate (12);
a build station piston (14) configured to adjust the height of the build plate (12) as a part (16) is built on top of the build plate (12);
a powder chamber (18) configured to contain loose build powder (20), wherein the powder chamber (18) surrounds the build plate (12);
a laser system (26) configured to direct a laser beam (30) onto the loose build powder (20) to form a melt pool, wherein when the melt pool forms a layer of the part (16) as the melt pool solidifies and wherein as each layer of the part (16) is formed the build station piston (14) lowers the build plate (12) and part (16) by a predetermined distance corresponding to a desired thickness of a next layer of the part (16);
a powder coater (22) configured to distribute additional build powder (24) over the part (16) after completion of each layer of the part (16);
a controller (32);
at least one neuromorphic sensor (38) configured to capture asynchronous data indicative of visually observable changes to the melt pool; and
means to transmit to the controller the asynchronous data from the at least one neuromorphic sensor (38) and, optionally, the synchronous data from the at least one synchronous sensor (40);
wherein the controller (32) is configured to process the asynchronous data from the at least one neuromorphic sensor (38) to determine whether conditions in the LPBF additive manufacturing system (10) are suitable for formation of or protentional formation of defects in the part (16); and
wherein the controller (32) is further configured to take at least one predetermined mitigation action to mitigate the formation of or potential formation of defects in the part (16).

2. The system of claim 1, further comprising at least one synchronous sensor (40) configured to capture synchronous data that includes at least one of melt pool temperature and melt pool pressure, wherein the controller (32) is configured to process the asynchronous data from the at least one neuromorphic sensor (38) and the synchronous data from the at least one synchronous sensor (40) to determine whether conditions in the LPBF additive manufacturing system (10) are suitable for formation of or protentional formation of defects in the part (16).

3. The system of claim 1 or 2, wherein the controller (32) is further configured to process at least one of laser beam power, laser beam velocity, laser beam spot size, build plate temperature, layer thickness, laser hatch distance, laser hatch delay time, and laser hatch stripe width along with the asynchronous data from the at least one neuromorphic sensor (38) and the synchronous data from the at least one synchronous sensor (40) to determine whether conditions in the LPBF additive manufacturing system (10) are suitable for the formation of or protentional formation of defects in the part (16).

4. The system of any preceding claim, wherein the at least one predetermined mitigation action is at least one of:
notifying an operator of the formation of or potential formation of defects in the part (16) by providing a visual or aural alert;
changing at least one LPBF system operating parameter for at least the next layer of the build process;
reworking all or part of a layer in which the defect was detected;
stopping the build process so the part (16) can be reworked manually; and
stopping the build process so the part (16) can be scrapped.

5. The system of claim 4, wherein changing at least one LPBF additive manufacturing system operating parameter for at least the next layer of the build process includes changing at least one of laser beam power, laser beam velocity, laser beam spot size, build plate temperature, layer thickness, laser hatch distance, laser hatch delay time, and laser hatch stripe width.

6. A method for correlating laser powder bed fusion (LPBF) additive manufacturing system data with formation of defects in LPBF manufactured parts (16), comprising the steps of:
determining data available from the LPBF additive manufacturing system (10);
selecting at least one build design to be a basis for collecting data to correlate LPBF additive manufacturing system data with formation of defects in LPBF manufactured parts (16);
building a plurality of test pieces (16) of the at least one build design using a LPBF additive manufacturing system (10) and collecting at least a portion of the data available from the LPBF additive manufacturing system (10) as each of the plurality of test pieces (16) is built;
inspecting each of the plurality of test pieces (16) to determine if any of the test pieces (16) have defects;
assessing any defects identified as a result of the inspection to determine when the defects formed during the build process and the likely cause of the defect;
correlating data collected when the defects formed during the build process to the identified defects;
determining which of the LPBF additive manufacturing system operating conditions that are observable with the at least one neuromorphic sensor (38) and the at least one synchronous sensor (40) can be used as criteria to indicate the formation of or potential formation of defects; and
providing to a LPBF additive manufacturing system controller (32) the identified criteria to indicate the formation of or potential formation of defects in a part (16), whereby the LPBF additive manufacturing system controller (32) is configured to provide a real time indication of the formation of or potential formation of defects in the part (16) during a build cycle.

7. The method of claim 6, wherein the build design is representative of parts (16) to be built using the LPBF additive manufacturing system (10).

8. The method of claim 6 or 7, wherein building a plurality of test pieces (16) of the at least one build design using a LPBF additive manufacturing system (10) includes selecting LPBF additive manufacturing system operating parameters so the test pieces (16) represent a range of LPBF additive manufacturing system operating parameters.

9. The method of any of claims 6 to 8, wherein building a plurality of test pieces (16) of the at least one build design using a LPBF additive manufacturing system (10) includes selecting LPBF additive manufacturing system operating parameters to induce the formation of defects in the plurality of test pieces (16).

10. The method of claim 9, wherein the defects in the plurality of test pieces (16) include one or more of porosity, unfused powder, balling, cracking, warping, delamination, swelling, and formation of humps and valleys.

11. The method of any of claims 6 to 10, wherein collecting at least a portion of the data available from the LPBF additive manufacturing system (10) includes recording the data for analysis.

12. The method of any of claims 6 to 11, wherein inspecting each of the plurality of test pieces (16) to determine if any of the test pieces (16) have defects, includes inspecting the test pieces (16) by at least one of visual inspection, dye penetrant inspection, x-ray inspection (including CT/CAT scans), and destructive inspection.

13. A method for additive manufacturing parts (16) using a laser powder bed fusion (LPBF) additive manufacturing system (10), comprising the steps of:
providing to the LPBF additive manufacturing system (10) an initial batch of build powder (20);
building a part (16) using selected LPBF additive manufacturing system operating parameters;
collecting data about the LPBF additive manufacturing system operating conditions with at least one neuromorphic sensor (38) and, optionally, at least one synchronous sensor (40);
transmitting to a LPBF additive manufacturing system controller (32) the data collected about the LPBF additive manufacturing system operating conditions with the at least one neuromorphic sensor (38) and, optionally, the at least one synchronous sensor (40);
processing, by the LPBF additive manufacturing system controller (32), the data collected about the LPBF additive manufacturing system operating conditions with the at least one neuromorphic sensor (38) and, optionally, the at least one synchronous sensor (40) to determine whether conditions in the LPBF additive manufacturing system (20) are suitable for the formation of or protentional formation of defects; and
if the controller (32) determines that conditions are suitable for the formation of or potential formation of defects, taking, by the controller (32), at least one predetermined mitigation action to mitigate the formation of or potential formation of defects.

14. The method of claim 13, wherein the selected LPBF additive manufacturing system operating parameters include at least one of laser beam power, laser beam velocity, laser beam spot size, build plate temperature, layer thickness, laser hatch distance, laser hatch delay time, and laser hatch stripe width.

15. The method of claim 13 or 14, wherein the at least one predetermined mitigation action is at least one of:
notifying an operator of the formation of or potential formation of defects by providing a visual or aural alert;
changing at least one of the LPBF additive manufacturing system operating parameters for at least the next layer of the build process by changing at least one of laser beam power, laser velocity, laser spot size, build plate temperature, layer thickness, and laser hatch distance, laser hatch delay time, and laser hatch stripe width;
reworking all or part (16) of a layer in which the defect was detected;
stopping the build process so the part (16) can be reworked manually; and
stopping the build process so the part (16) can be scrapped.
